# EUROPÄISCHE PATENTSCHRIFT

(11) **EP 1 889 693 B1**
(45) Veröffentlichungstag und Bekanntmachung des Hinweises auf die Patenterteilung: **02.03.2011**
(21) Anmeldenummer: 07120893.8
(22) Anmeldetag: 20.06.2005
(51) Int. Cl.: B25H 3/00, H02J 7/00, B25F 5/02

(54) **Akkuschrauber mit Ladeschale**
Battery-operated screwdriver with charging cradle
Visseuse sans fil avec socle chargeur

(30) Priorität: 09.08.2004 DE 102004038788
(43) Veröffentlichungstag der Anmeldung: 20.02.2008
(62) Teilanmeldung aus: 05752519.8
(73) Patentinhaber: Robert Bosch GmbH, 70442 Stuttgart (DE)
(72) Erfinder: Roehm, Heiko, 70176 Stuttgart (DE); Meeuwissen, Jean-Paul, 4876 VD Etten-Leur (NL); Bergmann, Julian, 70178 Stuttgart (DE)

(56) Entgegenhaltungen:
- EP-A- 0 951 127
- CH-A- 675 330
- US-A- 3 783 364
- US-A- 4 703 852
- US-A1- 2004 017 177
- US-B1- 6 267 238

## Beschreibung

### Stand der Technik

Die vorliegende Erfindung geht aus von einem Akkuschrauber mit Ladeschale gemäß dem Oberbegriff des Anspruchs 1. Ein derartigen Akkuschrauber mit Ladeschale geht beispielsweise aus der US 470 3852 hervor.

Es gibt bereits Akkuschrauber in der Leistungsklasse zwischen 2.4V bis 3.6V, wie beispielweise aus der EP 1066 930 bekannt. Diese haben zurreist mehrere NiCd-Zellen als Energiespeicher, einen Ein-Aus-Schalter mit kurzer Schalttaste und ohne stufenlose Drehzahlregelung sowie einen Schalter zur Umschaltung von Links- auf Rechtslauf, ein die Motordrehzahl untersetzendes Getriebe, insbesondere Planetengiatriebe, und einen Motor mit einem Standard-Durchmesser von 27.5mm. Dabei gibt es stabförmige und pistolenförmige Ausführungen sowie Ausführungen mit winkelverstellbarem Griff. Diese Geräte werden zum Laden entweder über einen Stecker mit dem Ladegerät verbur den - ähnlich wie ein Handy oder ein Rasierapparat - oder über eine Halterung mit Kontakten, in die das Gerät gelegt wird. Die Halterungen sind z. B. an einer Wand befestigbar, um die Handhabung beim Laden zu vereinfachen.

Dazu muss zuvor für das Ladegerät und die elektrische Verbindung der Lademodus hergestellt werden, was jedoch nicht automatisch nach jeden. Einsatz geschieht. Dadurch ist das Gerät oft gerade dann nicht einsatzbereit ist, wenn es benötigt wird, wobei der bekannte Memoryeffekt für herkömmliche NiCd-Akkus nachteilig hinzukommt. NiCd-Akkus entladen nach einer gewissen Zeit ohne Leistungsabgabe, so dass damit bestückte Akku-Schrauber auch unbenutzt nach kurzer Zeit teilentladen sind. Werden sie teilentladen in den Lademodus versetzt, steht aufgrund des Memoryeffekts nach dem Laden nur die Differenz der Neulademenge - und damit eine verringerte Leistung - zur Verfügung.

Ein weiterer Nachteil der bekannten Akkuschrauber ist die begrenzte Verfügbarkeit von Schraubbits bzw. unterschiedlichen Einsatzwerkzeugen.

Aus EP 951127 A2 ist eine akkubetriebene Handwerkzeugrnaschine bekannt, die zum Laden als ganzes auf dem Ladegerät abgelegt wird, wobei der Ladevorgang durch das Ablegen der Handwerkzeugmaschine auf dem Ladegerät automatisch gestartet wird.

US 4 703 852 beschreibt einen Tragekasten für eine Handwerkzeugmaschine und Zubehör. Für die Aufnahme des Zubehörs sind Zubehörfächer vorgesehen, die schubladenartig in dem Tragekasten aufgenommen sind. Jedes Zubehörfach hat einen klappbaren Deckel zur Entnahme eines Zubehörteils.

### Vorteile der Erfindung

Der erfindungsgemäße Akkuschrauber mit den Merkmalen des Anspruchs 1 hat den Vorteil, dass er stets am gleichen Platz mit voller, verfügbarer Ladekapazität schnell und sicher greifbar, dabei kostengünstig herzustellen und äußerst leicht und handlich ist.

Da die Li-Ion-Zelle fast keine Selbstentladung hat, ist der Akkuschrauber auch nach langen Benutzungspausen voll einsatzbereit, wobei in Benutzungspausen der Akkuschrauber beliebig lange auf der Ladeschale im Lademodus ruhen kann. Dabei ist die Ladeschale standsicher auf eine ebene Ablagefläche stellbar und muss nicht befestigt und auch nicht festgehalten werden, wenn der Akkuschrauber entnommen wird. Dadurch ist er immer mit nur einer Hand schnell entnahmebereit, wobei kein Stecker gezogen oder keine Halterung entfernt werden muss. Außerdem ist jederzeit automatisch sichergestellt, dass der Akkuschrauber geladen wird.

Die auf der Platine aufgelöteten Ladekontaktzungen ragen durch Öffnungen im unteren Ende des Handgriffs und werden in Ladestellung von Gegenkontakten der Ladeschale kontaktiert, wobei keine zusätzlichen Kabel oder Kupplungsstecker betätigt werden müssen.

Je nach Drehrichtung des Motors leuchtet eine grüne - als Richtungspfeil nach vorn - oder eine rote - als Richtunspfeil nach hinten weisende - auf die Platine gelötete Leuchtdiode auf. Diese sind durch mittels transparentem Kunststoffteil als Fenster überdeckte Öffnungen im Gehäuse hindurch sichtbar. Eine dazwischen angeordnete weitere, rechteckig gerahmte Leutdiode dient als Ladkontrollleuchte bzw. als Ladezustandsanzeige.

Durch die Verwendung nur einer einzigen langen und schlanken fest im Handgriff des Akkuschraubers eingebauten Lithium-Ionen (Li-Ion)-Zelle anstelle mehrerer 4/5 Sub-C Nickel-Cadmium-Zellen als Akku kann ein besonders kleiner Griffumfang erreicht werden.
Zwei relativ große, harte Spiralfedern halten die Ein-Ausschalt-Taste vorgespannt in Ihrer Ausschalt-Position und verhindern durch schnelles Öffnen bzw. Schließen der Kontakte bei deren über die Lebensdauer zunehmender Hochohmigkeit ihr Verschweißen mit dem Kontaktblech.
Die lange Ein-Ausschalt-Taste hat einen kurzen Betätigungshub und ist dadurch an jeder beliebigen Stelle zuverlässig einschaltend besonders leicht betätigbar. Dadurch sind - unabhängig von der Betätigungsposition - nur geringe Bedienkräfte nötig und das Gerät kann bequem in nahezu jeder Position der Bedienhand eingeschaltet werden. Um die Führung der Ein-Ausschalt-Taste gegenüber dem Gehäuse zu verbessern, hat sie zwei seitliche Führungszungen auf ihrer Innenseite, die im Gehäuse abgestützt gleitgelagert sind.
Weitere Volumenreduzierung des Akkuschraubers wird durch kompakte Bauweise des Getriebes und Getriebegehäuses erreicht, wobei das Getriebe als Planetengetriebe lediglich in das zylindrische Getriebegehäuse eingelegt und durch ein Axialsicherungsblech am Herausfallen gehindert wird, wobei zudem das Getriebegehäuse mit einer Innenverzahnung selbst als Sonnenrad dient.
Dadurch, dass sich das Motorgehäuse aus mittig geteilten Halbschalen zusammensetzt, die das Getriebegehäuse zangenartig mit radial nach innen ragenden Stützzungen von beiden Seiten umgreifen und zentriert in Montageposition festhalten, ist ohne gesonderte Befestigungselemente wie Schrauben oder Überrastelemente das Getriebegehäuse präzise und sicher mit dem Motorgehäuse verbindbar.
Weitere Gewichts- und Volumenreduzierung des Akkuschraubers wird durch Verzicht auf ein Spannfutter erreicht, wobei mittels Innensechskant der Abtriebswelle - passend für entsprechende Schraub- oder Bohrbits mit Sechskantschaft - diese Werkzeuge schnell und einfach wechselbar sind.
Ein-Ausschalt-Taste und Drehrichtungsumschalter sind so gestaltet, dass zum einen bei gedrückter Ein-Ausschalt-Taste der Drehrichtungsumschalter gesperrt ist und nicht bewegt werden kann und zum anderen die Ein-Ausschalt-Taste gesperrt ist und nicht in Einschaltposition gedrückt werden kann, wenn der Drehrichtungsumschalter in der Mittelstellung, der empfohlenen Transportstellung, steht.

Das Getriebegehäuse, die Platine mit Akku, Motor, Leuchtdioden und elektrischen Elementen sowie der Schalterdrücker mit Kontaktblech und Federn und das transparente Kunststoffteil werden in eine erste Halbschale gelegt, die zweite Halbschale darübergefügt und mit nur vier gleichen Schrauben geschlossen und damit komplett montiert und ergeben eine sehr kostengünstige Lösung.

### Zeichnungen

Nachstehend ist die Erfindung anhand eines Ausführungsbeispiels mit zugehöriger Zeichnung näher erläutert.

Es zeigen
Figur 1 eine Seitenansicht des teilweise geöffneten Akkuschraubers
Figur 2 eine Frontansicht des Akkuschraubers
Figur 3 eine Seitenansicht des in einer Ladeschale positionierten Akkuschraubers
Figur 4 einen vergrößerten Ausschnitt des Griffbereichs gemäß Figur 1
Figur 5 einen Draufsicht auf die Ladeschale mit Akkuschrauber in Ladeposition
Figur 6 eine Hinteransicht der Ladeschale mit Akkuschrauber gemäß Figur 5
Figur 7 eine Seitenansicht der Ladeschale mit Akkuschrauber gemäß Figur 5 mit separatem Bithalter und
Figur 8 eine räumliche Ansicht einer Variante der Ladeschale von oben.

### Beschreibung des Ausführungsbeispiels

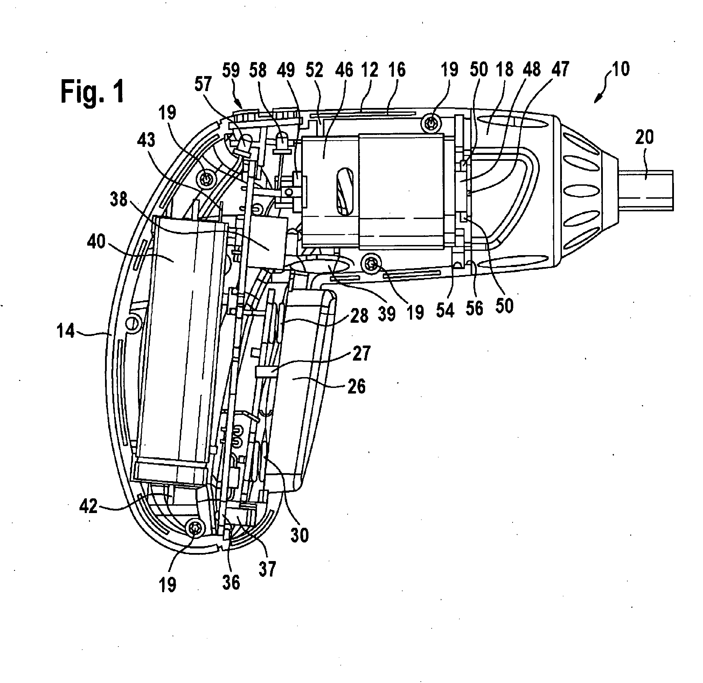

Figur 1 zeigt einen pistolenartigen Akkuschrauber 10 mit zur Schraubrichtung fluchtendem Motorgehäuse 12 und davon abgewinkeltem Handgriff 14. Das Motorgehäuse 12 mit Handgriff 14 wird aus zwei Halbschalen 16, 17 gebildet, die in einer Mittenebene 15 dicht aneinander abgestützt zusammenfügbar sind. Dazu greifen vier Schrauben durch Bohrungen der einen Halbschale 17 in vier Schraubdome 19 der anderen Halbschale 16 und halten beide aneinander fest.

Eine Ein-Ausschalttaste 26 ist über die innere Länge des Handgriffs 14 verlaufend angeordnet zur Betätigung eines nicht näher bezeichneten Schalters. Die Ein-Ausschalttaste 26 erlaubt wegen ihrer besonderen Länge ein bequemes Ein- und Ausschalten auch in schwierigen Haltepositionen des Akkuschraubers 10. Sie ist an ihren Längsseiten mit seitlichen in den Handgriff 14 tretenden Stützzungen 27 versehen, die an entsprechenden Gegenflächen der Halbschalen 16, 17 eine sichere Führung bilden und ein präzises, spielfreies Hin- und Her-Bewegen ermöglichen.

Über zwei harte Druckfedern 28, 30 ist die Ein-Ausschalttaste 26 am Handgriff 14 elastisch abgestützt, so dass nach dem Einschalten die Federn 28, 30 die Ein- und Ausschalttaste 26 bei deren Loslassen selbsttätig in ihre Aus-Position zurückbefördern und die Motorbewegung stoppen. Der Betätigungshub ist durch nicht näher bezeichnete Anschläge begrenzt und ist mit 1 bis 4 mm sehr kurz und bedienfreundlich.

Zum Eintritt der Ein-Ausschalt-Taste 26 in das Motorgehäuse 12 ist eine entsprechende jeweils hälftig in den Halbschalen 16, 17 angeordnete Öffnung 29 vorgesehen, die die Ein-/Ausschalttaste 26 schachtartig führend eng umgreift. Die Ein-Ausschalttaste 26 trägt auf ihrer dem Handgriff 14 zugewandten Stirnseite oben und unten je eine längs überstehende Zunge, die die Öffnung 29 überragen und sich von innen an deren Rand abstützen und die Ein-Ausschalttaste 26 in der Ausschaltposition daran abstützend festhalten und Lösen aus dem Gehäuse 12 hindern.

Die Platine 36 trägt in ihrem unteren Bereich zwei symmetrisch angeordnete Ladekontaktzungen 37, die rechtwinklig aus der Ebene der Platine 36 austreten und dann jeweils am Ende nach außen abgewinkelte große Auflageflächen bilden. Diese durchtreten jede Halbschale 16, 17 symmetrisch zur Mittenebene 15 im unteren Ende des Handgriffs 14. Dabei sind sie an jeder Durchtrittsstelle in je einer Vertiefung innerhalb der Handgriffkontur "versenkt" eingebettet und für die nach außen überstehenden Ladekontakte 23 der Ladeschale 22 zugänglich, die sie im Ladezustand bei Auflage auf der Ladeschale 22 übergreifen und sich aufgrund deren federnder Anordnung sicher kontaktiert abstützen.

Des weiteren trägt die Platine 36 etwa mittig, flach und flächennah nicht näher bezeichnete Störwiderstände und Kondensatoren und im oberen Bereich den Schiebeschalter 38 sowie am oberen Ende zwei Leuchtdioden 57, 58 zur optischen Anzeige der Drehrichtung.

Die Platine 36 ist mit ihrer Längsseite parallel zum Handgriff 14 und mit ihrer Schmalseite quer zur Mittenebene 15 angeordnet und dabei in nicht näher bezeichneten nutartigen Aussparungen der beiden Halbschalen 16, 17 spielfrei so geklemmt, dass sie sich von Innen gegen die Halbschalen 16, 17 stützt und dadurch eine Verstärkungsrippe im Handgriff 14 bildet. Parallel zur Platine 36 ist im Handgriff 14 eine Lithium-Ionen-Zelle mit den bekannten Vorteilen als Akku 40 eingelegt, der von den beiden Halbschalen 16, 17 im Montagezustand zangenartig umgriffen und lagegesichert wird und damit in die Festigkeitsstruktur des Gehäuses 12 integriert ist. Der Akku 40 weist oben und unten jeweils ein als Lötfahne dienendes Kontaktblech 42, 43 auf, das mit der Platine 36 verdrahtet ist.

Oberhalb der Ein-Ausschalttaste 26 - im Zwickel zwischen abgewinkeltem Handgriff 14 und Motorgehäuse 12 - ist ein Schiebetaster 39 quer zur Mitteneben 15 des Motorgehäuses 12 durch nicht bezeichnete, seitliche Öffnungen der Halbschalen 16, 17 hin- und herschiebbar angeordnet. Der Schiebetaster 39 umgreift mit einer nicht näher bezeichneten etwa mittigen Aussparung gabelartig ein Schiebeorgan 41 eines kastenartigen, im oberen Bereich der Platine 36 fixierten Schiebeschalters 38. Das auf den Schiebeschalter 38 aufgesetzte Schiebeorgan 41 ist über den Schiebetaster 39 in die äußerste linke und rechte Seitenposition und in eine Mittenposition verstellbar.

Ein gleichstrombetriebener Motor 46 im vorderen Bereich des Motorgehäuses 12 wird von den Halbschalen 16, 17 nach deren Montage zangenartig umgriffen und in seiner Arbeitslage spielfrei, parallel zum im Motorgehäuse 12 eingelegten Getriebegehäuse 18 fluchtend ausgerichtet gehalten. Der Motor 46 hat einen hinteren und vorderen stufenartigen Motorbund 48, 49, aus dem das hintere und vordere Ende der Motorwelle 45 austritt. Der Motor 46 ist über seinen vorderen und hinteren Motorbund 48, 49 in entsprechenden lagerbockartigen Rippen der Halbschalen 16, 17 zentriert abgestützt gelagert. Das vordere Ende 47 der Motorwelle 45 ist mit einer Abflachung bzw. mit einem Zweiflach versehen, insbesondere umgeformt, und greift damit in der Montagelage in eine entsprechende abgeflachte Ausnehmung eines Eingangsritzels 66 des im Getriebegehäuse 18 angeordneten Getriebes 65, das als Planetengetriebe ausgestaltet ist. Damit ist eine kraftschlüssige Kupplung mit grober Maßtoleranz und einfacher Montagemöglichkeit geschaffen, wobei der Motor 46 mit dem Getriebe 65 bzw. dem Getriebegehäuse 18 leicht zusammensteckbar ist und zusammengesteckt zur weiteren Montage in eine der Halbschalen 16, 17 einlegbar ist.

Stirnseitig umgreifen die beiden Halbschalen 16, 17 zangenartig und formschlüssig ein als separate zylindrische Baugruppe montiertes Getriebegehäuse 18 und halten es spielfrei fest. Dieses hat in zwei axialen, sich zum Motorgehäuse 12 erstreckenden, zungenartigen, teilzylindrischen Verlängerungen 60 eine Gehäuseringnut 54, die von einem Ringwulst 55 begrenzt wird. Der Ringwulst 55 greift in eine passende Gegenringnut 56 innen an der Stirnseite der Halbschalen 16, 17 des Motorgehäuses 12, wobei passende Gegenringwulste 53 der Halbschalen 16, 17 formschlüssig in die Gehäuseringnut 54 des Getriebegehäuses 18 greifen.

In die zwei asymmetrischen Aussparungen zwischen den zwei Verlängerungen 60 des Getriebegehäuses 18 greifen quer zur Längsrichtung des Motorgehäuses 12 abgewinkelte Gegenverlängerungen 61 fehlmontagesicher, spielfrei ein, die zugleich lagerbockartig den Motorbund 58 des Motors 46 zentrierend abstützen, so dass auch dieser in die Festigkeitsstruktur des Motorgehäuses 12 integriert ist. Gesonderte Befestigungselemente wie Schrauben oder dergleichen sind dabei unnötig. Dies erleichtert die Montage bei verringerter Anzahl von Einzelteilen.

Oben hinten trägt das Motorgehäuse 12 ein eingelegtes transparentes Fenster 59, das sich in der Trenneben längs erstreckt und mittig geteilt ist. Es gibt durch drei Durchbrüche der Halbschalen 16, 17 den Blick auf eine blaue bzw. rote Leuchtdiode 57, 58 frei, jede einer Drehrichtung der Motorwelle 45 zugeordnet und mit dieser aufleuchtend sowie eine zwischen den beiden Leuchtdioden angeordnete Ladekontrollleuchte.

Aus dem vorn zu einem abgerundeten Kegel zulaufenden Getriebegehäuse 18 tritt vorn eine Abtriebsspindel 20, die stirnseitig als Innensechskant 21 zur Aufnahme passender Standardbits ausgestaltet ist. Der Innensechskant 21 ist mit Mitteln versehen, die den eingeschobenen Schraubbit oder Bohrbit gegen Verlieren festhalten, so dass für deren axiale Entnehmen ein gewisser Widerstand von Hand überwunden werden muss.

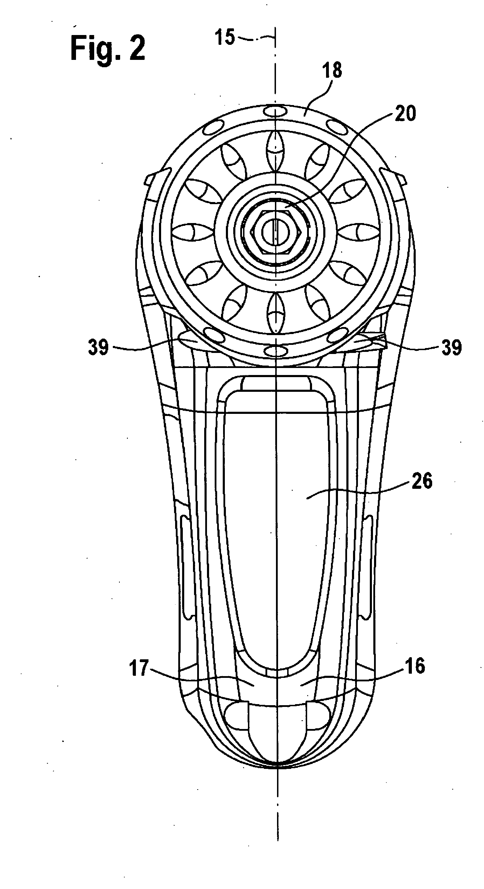

Figur 2 zeigt den Akkuschrauber 10 von vom, wobei über die Darstellung von Figur 1 hinaus die Größenverhältnisse von Handgriff 14 zur Länge der Ein-Ausschalttaste 26 deutlich wird.

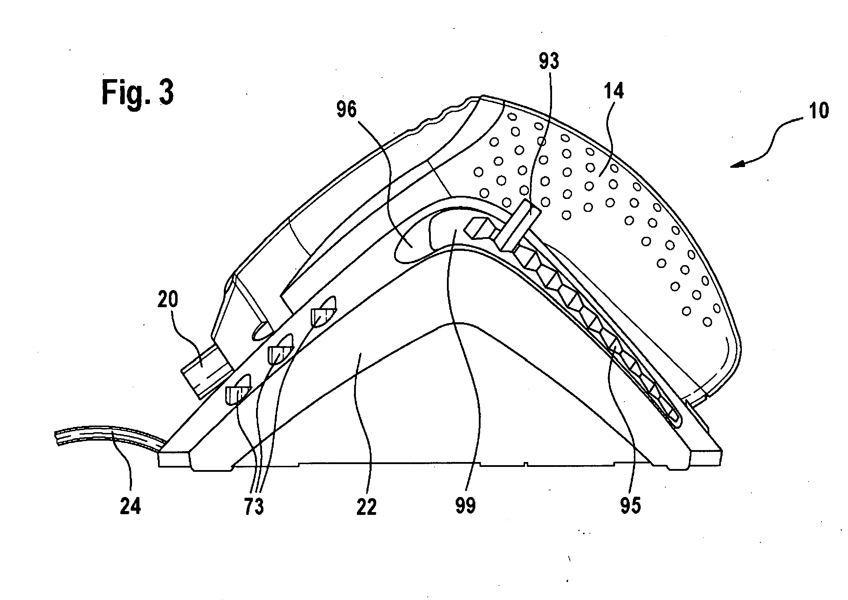

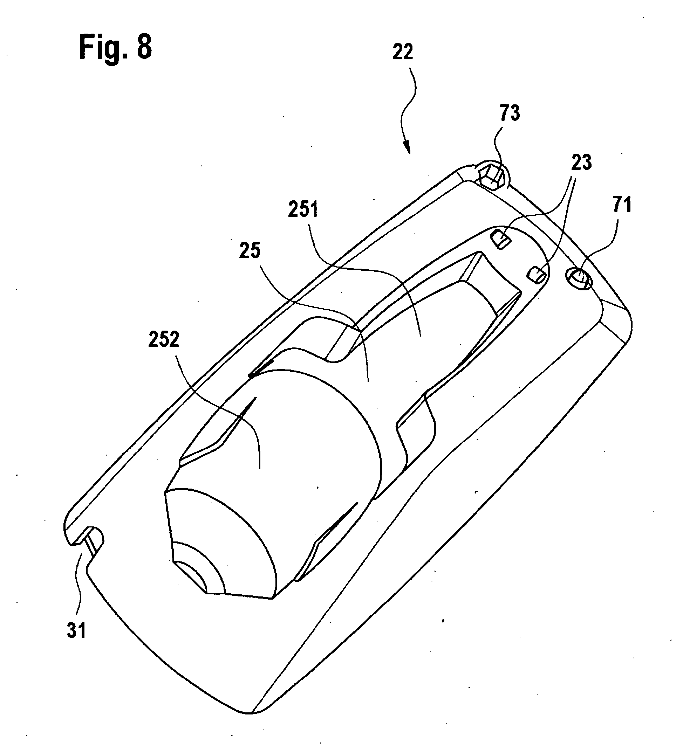

Figur 3 zeigt eine kastenartige Ladeschale 22, deren von der Seite betrachtete Außenkontur einem auf seiner Basisseite stehenden Dreieck entspricht. Die Schrägflächen sind der ihnen beim Auflegen des Akkuschraubers 10 zugewandten, pistolenförmigen Kontur des Akkuschraubers 10 angeglichen und nutartig vertieft. Der Akkuschrauber 10 kann daher mit seiner Innenseite in passende Einbettungen 25 (Fig. 8) für den Handgriff 14 bzw. des Motor- und Getriebegehäuse 12 und 18 spielfrei eintreten, und darin durch sein Eigengewicht gesichert lagern, wobei die Kontaktierung zwischen seinen Ladekontaktzungen 38 und den Ladekontakten 23 der Ladeschale 22 besonders sicher ist.

Die Ladekontakte 23 ragen aus der Kontur der Einbettung 25 der Ladeschale 23 heraus nach oben, so dass sich der Akkuschrauber 10 beim Einlegen in die entsprechende Einbettung 25 der Ladeschale 22 mit seinem Eigengewicht über seine Ladekontaktzungen 37 an den federnden Ladekontakten 23 (Fig. 8) abstützt. Allein durch Auflegen des Akkuschraubers 10 auf die vorgesehene Stelle der Ladeschale 22 stellt sich sofort der Ladezustand mit hörbarem Klicken durch mechanisch sichere Kontaktierung ein, sofern die Ladeschale 22 über ihr Elektrokabel 24 an die Netzspannung angeschlossen ist. Dazu tritt aus der Ladeschale 22 in Betrachtungsrichtung nach links das Elektrokabel 24 zum Netzanschluß bzw. zur Stromversorgung der Ladeschale 22.

Im hinteren, dem Handgriff 14 des Akkuschraubers 10 zugeordneten Bereich trägt die Ladeschale 22 einen lösbar eingeklipsten Bithalter 99. Dieser hat mehrere Einstecköffnungen 95 zur verliersicheren Aufnahme von Standard-Schraubbits mit Sechskantschaft. Außerdem trägt die Ladeschale auf ihrer Oberseite vor dem Bithalter 99 drei weitere, feste Einstecköffnungen 73 für Schraub- bzw. Bohrbits.

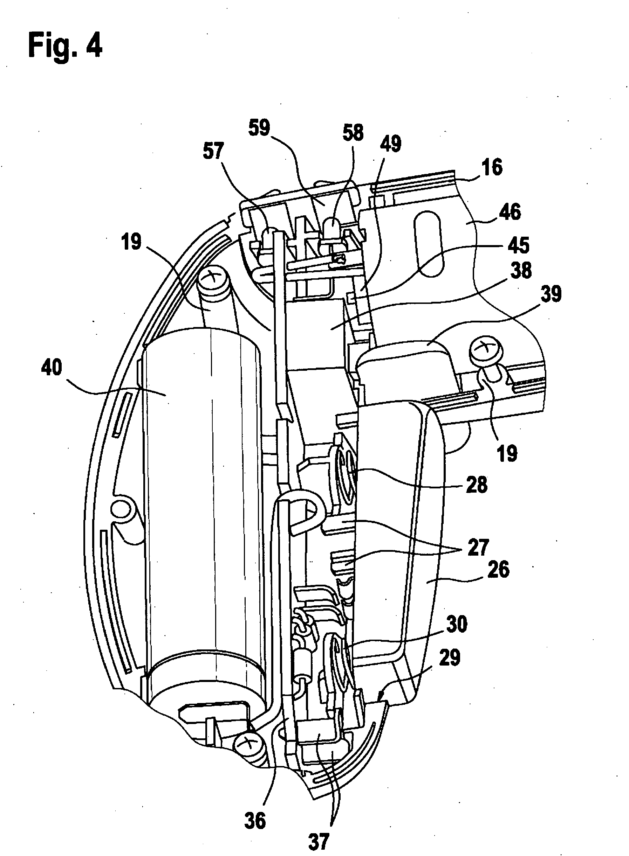

Figur 4 zeigt eine ausschnittsweise Vergrößerung der ersten Halbschale 16 mit den eingefügten Einzelteilen gemäß Figur 1, wobei die Ausgestaltung des Akkus 40 mit angrenzenden Teilen sowie der Platine 36 mit den daran befestigen Teilen sowie der Ein-Ausschalttaste 26 und den Ladekontaktzungen 37 deutlich erkennbar ist.

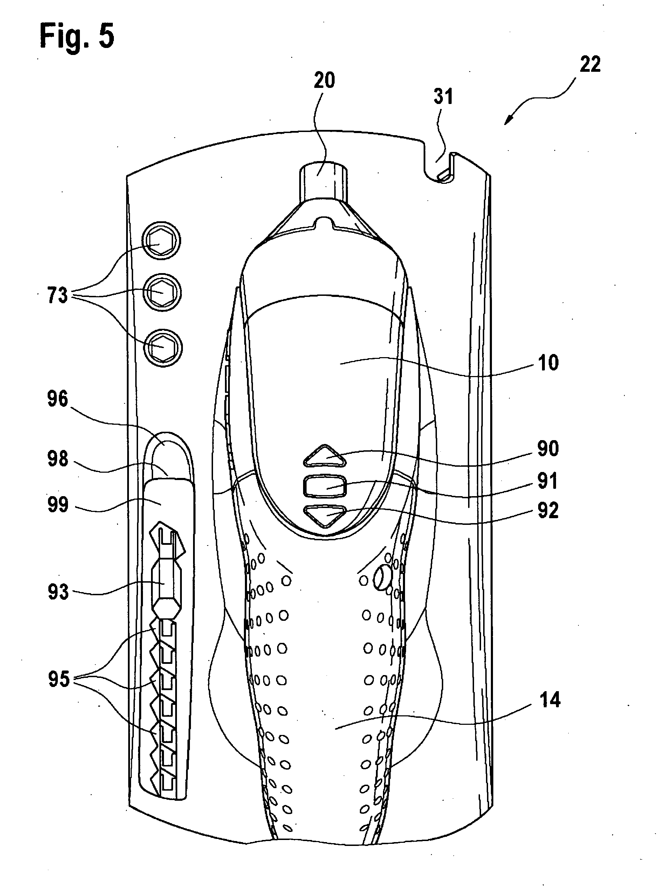

Figur 5 zeigt eine Ansicht von oben auf den in der Ladeschale 22 in Ladeposition sitzenden Akkuschrauber 10, wobei in Betrachtungsrichtung links neben dem Handgriff 14 und parallel zu diesem ein rot eingefärbter Bithalter 99 erkennbar ist. Zur überrastbaren Aufnahme des Bithalters 99 weist die Ladeschale 22 eine nutartige, bereichsweise hinterschnittene Vertiefung 98 auf, die geringfügig schmaler als der Bithalter 99 ist. Da dieser aus elastischem Material besteht, kann er durch festes darauf Drücken bequem in die Vertiefung 98 einrastend lagegesichert werden.

Die Vertiefung 98 ist länger als die Längserstreckung des Bithalters 99, so dass nach Einsetzen des Bithalters 99 in die Vertiefung 98 diese mit einem Restbereich 96 frei bleibt zum Untergreifen bzw. zwecks Entnahme des Bithalters 99 mit einem Finger.

In federelastisch verengbare Fächer 95 des magazinartigen Bithalters 99 sind nahezu senkrecht zur Außenkontur der Schrägflächen des Ladeschale 22 Sechskantbits 93 gegen Verlieren gesichert, kraftschlüssig gehaltert einlegbar.

Der Akkuschrauber 10 trägt oben im hinteren Bereich mittig je ein nach vorn und ein nach hinten weisendes, pfeilartiges Fenster 90, 92, unter dem eine die Drehrichtung anzeigende Leuchtdiode sitzt - sowie ein dazwischen angeordnetes, rechteckiges Fenster 91, unter dem ein Ladekontrollleuchte sitzt.

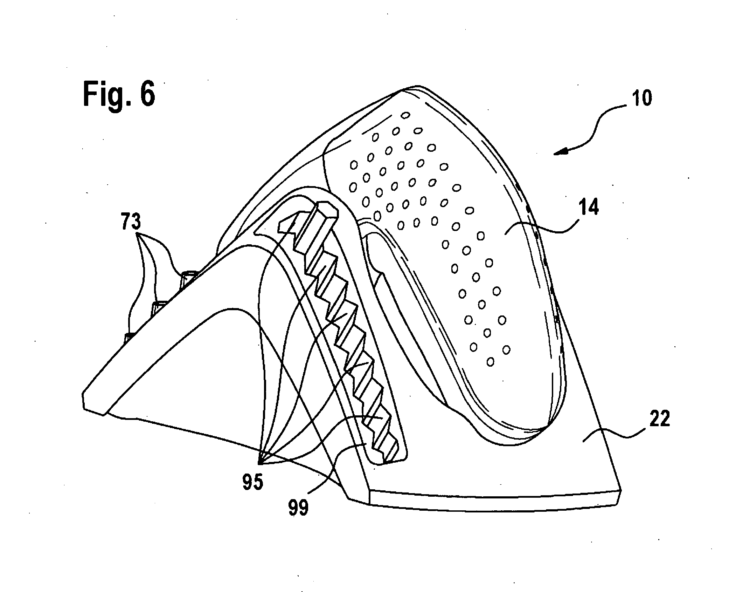

Figur 6 zeigt eine Ansicht der Ladeschale 22 schräg von hinten mit aufgelegtem Akkuschrauber 10. Dabei ist der entnehmbare Bithalter 99 mit etwa zehn Fächern 93 zum Einstecken von Schraubbits, gemäß Figur 5 erkennbar und die drei festen Bit-Einstecköffnungen 73 im vorderen Bereich der Ladeschale 22. Dabei ist erkennbar, dass der Bithalter 99 in die Außenkontur des oberen Bereichs der Ladeschale 22 bündig eingepaßt ist.

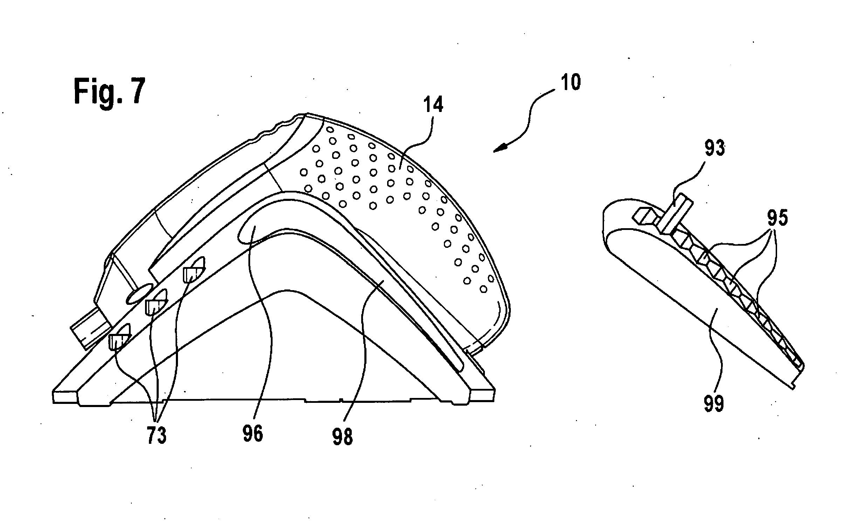

Figur 7 zeigt eine Seitenansicht der Ladeschale 22 mit aufgelegtem Akkuschrauber 10 sowie mit in Betrachtungsrichtung links davon getrennt angeordnet gezeichnetem Bithalter 99.

Figur 8 zeigt eine Draufsicht von oben auf die Ladeschale 22 mit Blick auf die Einbettung 25, die in eine Handgriffbettung 251 und einer Getriebegehäusebettung 252 unterteilt ist, so dass der Akkuschrauber 10 bündig und nahezu spielfrei eindeutig und narrensicher so in die Ladeschale 22 einlegbar ist, dass er sicher aufliegt und seine Ladekontaktzungen 37 (Figur 1, 2, 4) sicheren Kontakt mit den Ladekontakten 23 der Ladeschale 22 behalten.

## Patentansprüche

1. Akkuschrauber mit Ladeschale (22), wobei der Akkuschrauber (10) mit einem Gehäuse (12, 18) mit einem Handgriff (14) mit Akku (40), sowie mit Ladekontaktzungen (37) zum Aufladen des Akkus (40) auf der Ladeschale (22), wobei der Akkuschrauber (10) einen Akku (40) aufweist, der als Lithium-lonen (Li-Ion)-Zelle ausgestaltet ist, und zeitlich unbegrenzt auf der Ladeschale (22) ablegbar ist, wobei der Lademodus automatisch herstellbar ist, und die Ladeschale (22) als Träger zur unverlierbaren Aufbewahrung von Einsatzwerkzeugen des Akkuschraubers (10) vorgesehen ist, **dadurch gekennzeichnet, dass** die Ladeschale (22) einen lösbar überrastend aufnehmbaren Bithalter (99) mit mehreren Einstecköffnungen (95) zur verliersicheren Aufnahme von Schraubbits (93) aufweist.

2. Akkuschrauber mit Ladeschale nach Anspruch 1, **dadurch gekennzeichnet, dass** im Lademodus der Handgriff (14) so weit von der Ladeschale (22) absteht, dass er zur Entnahme des Akkuschraubers (10) von Hand bequem untergreifbar und/oder weitgehend umgreifbar ist.

3. Akkuschrauber mit Ladeschale nach Anspruch 1, **dadurch gekennzeichnet, dass** die Ladekontaktzungen (37) durch seitliche Schlitze (35) im unteren Ende des Handgriffs (14) beidseitig der Trennebene (15) auf der Seite des Innenwinkels nach außen ragen und im Lademodus auf Ladekontakten (23) der Ladeschale (22) rasten, ohne dass gesonderte Kabel oder Kupplungsstecker betätigt werden müssen.

4. Akkuschrauber mit Ladeschale nach Anspruch 1, **dadurch gekennzeichnet, dass** der Akkuschrauber (10) im Lademodus mit den Vertiefungen (33) seines Handgriffs (14) die federnden Ladekontakte (23) auf der Ladeschale (22) übergreift und damit überrastend gegen ungewolltes Lösen von der Ladeschale gesichert ist.

5. Akkuschrauber mit Ladeschale nach Anspruch 1, **dadurch gekennzeichnet, dass** die Ladeschale (22) auf ihrer Oberseite Einbettungen (25, 251, 252) zur Aufnahme des Akkuschraubers (10) aufweist, die einem Abdruck seiner vom Handgriff (14) und dem Motorgehäuse (12) und dem Getriebegehäuses (18) eingeschlossenen Innenwinkel-Außenflächen entsprechen und dass mindestens eine der Einbettungen (25, 251, 252) weniger als 90 ° geneigt zur Senkrechten verläuft.

6. Akkuschrauber mit Ladeschale nach Anspruch 1, **dadurch gekennzeichnet, dass** der Handgriff (14) nur mit seiner Ein-Ausschalttaste (26) kielartig in Einbettung (25, 251, 252) der Ladeschale (22) eintritt und der Handgriff (14) selbst von der Ladeschale (22) absteht und nur minimal in die Einbettung (25, 251, 252) eintaucht

7. Akkuschrauber mit Ladeschale nach Anspruch 1, **dadurch gekennzeichnet, dass** die Ladeschale (22) standsicher auf eine ebene insbesondere waagerechte Ablagefläche stellbar ist, ohne dass sie befestigt und festgehalten werden muss, wenn der Akkuschrauber (10) entnommen wird.

8. Akkuschrauber mit Ladeschale nach einem der vorhergehenden Ansprüche, **dadurch gekennzeichnet, dass** die Ladeschale (22) eine nutartige, bereichsweise hinterschnittene Vertiefung (98) zur überrastbaren Aufnahme des Bithalters (99) aufweist, die geringfügig schmaler als der Bithalter (99) ist und de Bithalter (99) aus elastischem Material besteht.

9. Akkuschrauber mit Ladeschale nach Anspruch 8, **dadurch gekennzeichnet, dass** die Vertiefung (98) länger als die Längserstreckung des Bithalters (99) ist, so dass nach Einsetzen des Bithalters (99) in die Vertiefung (98) diese mit einem Restbereich (96) zur Entnahme des Bithalters (99) frei bleibt.

## Claims

1. Battery-operated screwdriver with charging cradle (22), wherein the battery-operated screwdriver (10) is provided with a housing (12, 18), with a handle (14), with a battery (40) and with charging contact tongues (37) for charging the battery (40) on the charging cradle (22), wherein the battery-operated screwdriver (10) has a battery (40), designed as a lithium-ion (Li-Ion) cell, and can be placed on a charging cradle (22) for an unlimited time, wherein the charging mode can be produced automatically, and the charging cradle (22) is provided as a support for captively storing application tools of the battery-operated screwdriver (10), **characterized in that** the charging cradle (22) has a bit holder (99) which can be releasably accommodated in an overlatching manner and which has a plurality of insertion openings (95) for captively accommodating screwdriving bits (93).

2. Battery-operated screwdriver with charging cradle according to Claim 1, **characterized in that** the handle (14) projects from the charging cradle (22) in the charging mode to such an extent that it can easily be taken hold of from below by hand and/or can largely be grasped for removing the battery-operated screwdriver (10).

3. Battery-operated screwdriver with charging cradle according to Claim 1, **characterized in that** the charging contact tongues (37) project outwards through lateral slots (35) in the bottom end of the handle (14) on both sides of the parting plane (15) on the side of the inner angle and latch, in the charging mode, on charging contacts (23) of the charging cradle (22) without separate cables or coupler plugs having to be actuated.

4. Battery-operated screwdriver with charging cradle according to Claim 1, **characterized in that**, in the charging mode, the battery-operated screwdriver (10), with the recesses (33) of its handle (14), overlaps the flexible charging contacts (23) on the charging cradle (22) and is thus secured in an overlatching manner against unintentional release from the charging cradle.

5. Battery-operated screwdriver with charging cradle according to Claim 1, **characterized in that** the charging cradle (22) has, on its top side, embedding means (25, 251, 252) for accommodating the battery-operated screwdriver (10), said embedding means (25, 251, 252) corresponding to an impression of its inner-angle outer surfaces enclosed by the handle (14) and the motor housing (12) and the transmission housing (18), and **in that** at least one of the embedding means (25, 251, 252) runs at an angle of less than 90° to the perpendicular.

6. Battery-operated screwdriver with charging cradle according to Claim 1, **characterized in that** the handle (14) enters the embedding means (25, 251, 252) of the charging cradle (22) in a keel-like manner only with its on/off button (26), and the handle (14) itself projects from the charging cradle (22) and plunges into the embedding means (25, 251, 252) only to a minimum extent.

7. Battery-operated screwdriver with charging cradle according to Claim 1, **characterized in that** the charging cradle (22) can be placed in a stable manner on a flat, in particular horizontal, rest surface without having to be fastened or held in place when the battery-operated screwdriver (10) is removed.

8. Battery-operated screwdriver with charging cradle according to one of the preceding claims, **characterized in that** the charging cradle (22) has a groove-like, partly undercut recess (98) for accommodating the bit holder (99) in an overlatching manner, said recess (98) being slightly narrower than the bit holder (99), and the bit holder (99) being made of an elastic material.

9. Battery-operated screwdriver with charging cradle according to Claim 8, **characterized in that** the recess (98) is longer than the longitudinal extent of the bit holder (99), such that, after the bit holder (99) is inserted into the recess (98), a residual region (96) of the latter remains free for removing the bit holder (99).

## Revendications

1. Visseuse sans fil avec socle chargeur (22), la visseuse sans fil (10) étant pourvue d'un boîtier (12, 18) avec une poignée (14) avec batterie (40), ainsi que de lames de contact de charge (37) pour charger la batterie (40) sur le socle chargeur (22), la visseuse sans fil (10) présentant une batterie (40) qui est configurée sous forme de cellule lithium-ion (Li-Ion), et qui peut être déposée sans limite de temps sur le socle chargeur (22), le mode de charge pouvant être établi automatiquement, et le socle chargeur (22) étant prévu sous forme de support pour conserver de manière imperdable des outils d'insertion de la visseuse sans fil (10), **caractérisée en ce que** le socle chargeur (22) présente un porte-embout (99) pouvant être reçu de manière amovible par encliquetage sur lui, avec plusieurs ouvertures d'enfichage (95) pour recevoir de manière imperdable des embouts de vissage (93).

2. Visseuse sans fil avec socle chargeur selon la revendication 1, **caractérisée en ce que** dans le mode de charge, la poignée (14) dépasse du socle chargeur (22) dans une mesure telle qu'elle puisse être saisie par le dessous de manière confortable à la main pour retirer la visseuse sans fil (10), et/ou qu'elle puisse être saisie largement sur son pourtour.

3. Visseuse sans fil avec socle chargeur selon la revendication 1, **caractérisée en ce que** les lames de contact de charge (37) font saillie vers l'extérieur à travers des fentes latérales(35) dans l'extrémité inférieure de la poignée (14) de chaque côté du plan de séparation (15) du côté de l'angle intérieur et s'encliquètent dans le mode de charge sur des contacts de charge (23) du socle chargeur (22), sans que des câbles séparés ou des connecteurs d'accouplement ne doivent être activés.

4. Visseuse sans fil avec socle chargeur selon la revendication 1, **caractérisée en ce que** la visseuse sans fil (10), dans le mode de charge, vient en prise par le dessus, par les renfoncements (33) de sa poignée (14), avec les contacts de charge élastiques (23) sur le socle chargeur (22), et est ainsi fixée par encliquetage par le dessus, empêchant tout enlèvement indésirable du socle chargeur.

5. Visseuse sans fil avec socle chargeur selon la revendication 1, **caractérisée en ce que** le socle chargeur (22) présente sur son côté supérieur des encastrements (25, 251, 252) pour recevoir la visseuse sans fil (10), qui correspondent à une empreinte de ses surfaces extérieures de l'angle intérieur formé par la poignée (14) et le boîtier de moteur (12) et le boîtier de transmission (18), et **en ce qu'**au moins l'un des encastrements (25, 251, 252) s'étend suivant un angle par rapport à la verticale inférieur à 90°.

6. Visseuse sans fil avec socle chargeur selon la revendication 1, **caractérisée en ce que** la poignée (14) n'entre par calage dans l'encastrement (25, 251, 252) du socle chargeur (22) qu'avec son bouton de marche-arrêt (26), et la poignée (14) elle-même dépasse du socle chargeur (22) et ne plonge que dans une mesure minimale dans l'encastrement (25, 251, 252).

7. Visseuse sans fil avec socle chargeur selon la revendication 1, **caractérisée en ce que** le socle chargeur (22) peut être placé de manière stable sur une surface d'appui plane, notamment horizontale, sans devoir être fixé et maintenu fixement, lorsque la visseuse sans fil (10) est retirée.

8. Visseuse sans fil avec socle chargeur selon l'une quelconque des revendications précédentes, **caractérisée en ce que** le socle chargeur (22) présente un renfoncement (98) en forme de rainure, en partie en contre-dépouille, pour recevoir par encliquetage par le dessus le porte-embout (99), lequel renfoncement est légèrement plus étroit que le porte-embout (99), et le porte-embout (99) se compose de matériau élastique.

9. Visseuse sans fil avec socle chargeur selon la revendication 8, **caractérisée en ce que** le renfoncement (98) est plus long que l'étendue longitudinale du porte-embout (99), de sorte qu'après l'insertion du porte-embout (99) dans le renfoncement (98), celui-ci reste libre avec une région restante (96) pour retirer le porte-embout (99).
